(19) Europäisches Patentamt
European Patent Office
Office européen des brevets

(11) EP 2 418 013 A1

(12) **EUROPEAN PATENT APPLICATION**
published in accordance with Art. 153(4) EPC

(43) Date of publication:
**15.02.2012 Bulletin 2012/07**

(21) Application number: **10761735.9**

(22) Date of filing: **08.04.2010**

(51) Int Cl.:
***B01D 69/02*** *(2006.01)* ***B01D 71/38*** *(2006.01)*
***B01D 71/80*** *(2006.01)* ***C08J 5/22*** *(2006.01)*

(86) International application number:
**PCT/JP2010/056364**

(87) International publication number:
**WO 2010/117036 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.04.2009 JP 2009095209**

(71) Applicants:
- **Yamaguchi University**
  **Yamaguchi 753-8511 (JP)**
- **Kuraray Co., Ltd.**
  **Okayama 710-0801 (JP)**

(72) Inventors:
- **HIGA, Mitsuru**
  **Ube-shi**
  **Yamaguchi 755-8611 (JP)**
- **JIKIHARA, Atsushi**
  **Kurashiki-shi**
  **Okayama 713-8550 (JP)**
- **KOBAYASHI, Kenichi**
  **Kurashiki-shi**
  **Okayama 713-8550 (JP)**
- **FUJIWARA, Naoki**
  **Kurashiki-shi**
  **Okayama 710-0801 (JP)**

(74) Representative: **Hock, Joachim**
**Müller-Boré & Partner**
**Grafinger Strasse 2**
**81671 München (DE)**

(54) **CHARGE-MOSAIC MEMBRANE**

(57) There is provided a charge-mosaic membrane comprising a cationic block copolymer (P) having a vinyl alcohol polymer block (A) and a cationic-group containing polymer block (B) as components; and an anionic block copolymer (Q) having a vinyl alcohol polymer block (C) and an anionic-group containing polymer block (D) as components. Such a charge-mosaic membrane is useful as a charge-mosaic membrane for piezodialysis because it exhibits higher membrane strength and higher permselectivity and has a larger charge density and a larger salt permeation flux.

[Fig. 1]

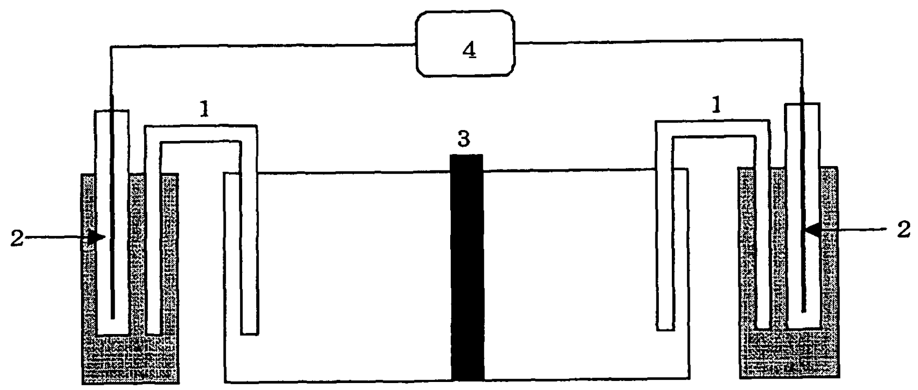




Printed by Jouve, 75001 PARIS (FR)

## Description

### TECHNICAL FIELD

The present invention relates to a charge-mosaic membrane **characterized in that** it has a polyvinyl alcohol cationic block copolymer and a polyvinyl alcohol anionic block copolymer as ion-exchange regions. In particular, this invention relates to a charge-mosaic membrane having a large salt permeation flux which is suitable for the use in piezodialysis.

### BACKGROUND ART

A charge-mosaic membrane is a membrane comprised of cation-exchange domains and anion-exchange domains which are alternately aligned in a parallel manner and each of which penetrates the membrane from one side to the other side. This unique charge structure can promote permeation of low-molecular-weight ions in a salt solution containing an electrolyte without requiring an external current. Positive charge regions and negative charge regions with a mutually opposite potential direction are aligned in a mosaic manner, resulting in formation of a circuit in which salt solution positioned on both sides of the membrane act as resistances. When cations and anions are supplied to the circuit through the negative and the positive charge domains, respectively, a circulating current is generated, so that salt transport is promoted. It means that a charge-mosaic membrane itself has an inherent mechanism for causing ion transport in contrast to an ion-exchange membrane with a fixed charge having a positive or negative charge region alone which requires an external current.

There have been reported charge-mosaic membranes produced by various processes. Patent Reference No. 1 has described a charge-mosaic membrane prepared utilizing a microphase separation phenomenon in a block copolymer consisting of cationic-group-containing blocks and anionic-group-containing blocks. This method, however, requires modification of a particular site in the block copolymer and/or homogeneous microphase separation of blocks with different charges, leading to a high cost and a complex production process, and furthermore, the method is not technically viable in industrial scale production.

Patent Reference No. 2 has described a process for manufacturing a charge-mosaic membrane comprising preparing a homogeneous polymer dispersion by mixing and dispersing a cation-exchange and an anion-exchange resins in a solution of a matrix polymer and then coating, extending and drying the dispersion. A charge-mosaic membrane prepared by the process exhibits increase in an amount of permeating ions with increase in a pressure as measured in a piezodialysis experiment. However, in this charge-mosaic membrane, a membrane matrix is not chemically bonded to the ion-exchange resin, and thus, in an interface between them, water and/or a neutral solute leak. High permselectivity cannot be, therefore, achieved.

Patent Reference No. 3 has described a process for manufacturing a charge-mosaic membrane wherein in a cross-linked continuous phase formed by an ionic (cationic or anionic) polymer, a polymer having opposite ionicity is dispersed as cross-linked particles with an average particle size of 0.01 to 10 $\mu$m, comprising forming a membrane using a dispersion prepared by dispersing, in a solution of an ionic polymer forming a continuous phase, spherical polymer particles with opposite ionicity; then crosslinking at least a continuous phase in the membrane; and then immersing the membrane in water or an aqueous solution. For a membrane prepared by this process, a domain size and a thickness can be easily controlled and a membrane with a large area can be relatively easily prepared. This manufacturing process has a problem that the necessity of preparing polymer particles with a small average particle size requires advanced technique and a longer period. Furthermore, since the charge-mosaic membrane thus prepared contains a microgel with a high water content, it exhibits quite poor pressure resistance. In particular, it has a structure in which interfacial adhesion between the membrane matrix and the microgel cannot be sufficiently increased, leading to leakage, lower ion permeability and inadequate mechanical strength. Therefore, although the membrane can be used as a membrane for diffusion dialysis, it cannot be used as a membrane for piezodialysis or exhibits extremely poor durability.

Non-patent Reference No. 1 has described a charge-mosaic membrane prepared by a lamination method. In this lamination method, cation-exchange membranes are prepared from polyvinyl alcohol into which a sulfonic group has been introduced by co-polymerization, and anion-exchange membranes are prepared from a mixed resin of polyvinyl alcohol and a polycation resin, respectively, and these are alternately laminated via polyvinyl alcohol as an adhesive to form a laminated charged block. The block is cut by a laboratory cutter perpendicularly to the lamination plane and crosslinked to give a laminated charge-mosaic membrane with a thickness of about 150 $\mu$m. It is described that a laminated charge-mosaic membrane thus prepared has a KC1-salt flux J(KC1) of $3.0 \times 10^{-9}$ mol $\cdot cm^{-2} \cdot s^{-1}$ as determined by diffusion dialysis and an electrolyte permselectivity ($\alpha$) of 2300, which means that the membrane is very permselective. It must, however, have a further higher charge density for piezodialysis applications.

Non-patent Reference No. 2 has described a charge-mosaic membrane prepared by a polymer blend method using polyvinyl alcohol as a membrane matrix. In the polymer blend method, to an aqueous solution of a anionic modified

PVA containing polyvinyl alcohol and a vinyl compound having an itaconic group as 2 mol% copolymerization composition is added hydrochloric acid to acidify the solution for preventing dissociation of hydrogen ion from a carboxyl moiety in an itaconic group. To the solution are added polyvinyl alcohol and an aqueous solution of polyallylamine hydrochloride to prepare an aqueous solution of blended polymers. This solution is cast on, for example, a glass plate to form a film, which is then chemically crosslinked to provide a charge-mosaic membrane. It is described that a charge-mosaic membrane thus obtained has a KCl-salt flux J (KCl) of $1.7 \times 10^{-8}$ mol $\cdot cm^{-2} \cdot s^{-1}$ as determined by diffusion dialysis and an electrolyte permselectivity ($\alpha$) of 48, which is relatively higher. It must, however, have a further higher charge density of the membrane for piezodialysis applications.

PRIOR ART REFERENCES

Patent References

Patent Reference 1: JP 59-203613 A
Patent Reference 2: JP 2006-297338 A
Patent Reference 3: JP 8-155281 A
Patent Reference 4: JP 59-187003 A
Patent Reference 5: JP 59-189113 A

Non-patent References

Non-patent Reference 1: J. Membr. Sci., Vol. 310, p.466 (2008).
Non-patent Reference 2: The proceedings of the Annual Meeting of the Society of Fiber Science and Technology, Japan, Vol.56, No.1, p.33 (2001).

SUMMARY OF THE INVENTION

PROBLEM TO BE SOLVED BY THE INVENTION

To solve the above problems, an objective of the present invention is to provide a charge-mosaic membrane for piezodialysis with higher membrane strength exhibiting higher permselectivity, a higher charge density and a larger salt permeation flux.

MEANS FOR SOLVING THE PROBLEMS

We have intensely conducted investigation for achieving the above objective. We have finally found that a charge-mosaic membrane containing a polyvinyl alcohol cationic block copolymer and a polyvinyl alcohol anionic block copolymer as ion-exchange domains exhibits an excellent salt permeation flux and is thus useful as a piezodialysis membrane, and have achieved this invention.

In accordance with the present invention, there is provided a charge-mosaic membrane comprising a polyvinyl alcohol cationic block copolymer and a polyvinyl alcohol anionic block copolymer as ion-exchange regions.

That is, a charge-mosaic membrane of the present invention comprises a cationic block copolymer (P) having a vinyl alcohol polymer block (A) and a cationic-group containing polymer block (B) as components; and an anionic block copolymer (Q) having a vinyl alcohol polymer block (C) and anionic-group containing polymer block (D) as components.

In the charge-mosaic membrane of the present invention, the cationic block copolymer (P) preferably contains 0.1 mol% or more of a cationic-group containing monomer. The anionic block copolymer (Q) preferably contains 0.1 mol% or more of an anionic-group containing monomer.

EFFECTS OF THE INVENTION

In a charge-mosaic membrane of the present invention, a permeation flux of an electrolyte is substantially larger than that of a nonelectrolyte. Thus, the membrane can, for example, efficiently separate an electrolyte from a nonelectrolyte and remove an electrolyte (desalting). Furthermore, since a cationic block copolymer and an anionic block copolymer have a similar structure, they have good mutual affinity and adhesiveness, so that leakage in an interface

can be prevented. Furthermore, the membrane is highly hydrophilic and thus exhibits higher anti-organicfouling properties and a smaller membrane resistance. In addition, because it is a block copolymer, membrane swelling in water can be prevented, so that the membrane has higher membrane strength and can be stably and efficiently used in piezodialysis for a longer period. Furthermore, the charge-mosaic membrane of the present invention has a higher charge density.

BRIEF DESCRIPTION OF THE DRAWINGS

FIG. 1 schematically shows a membrane potential measuring apparatus.
FIG. 2 schematically shows a water permeation test apparatus.
FIG. 3 schematically shows a piezodialysis test apparatus.

BEST MODE FOR CARRYING OUT THE INVENTION

A charge-mosaic membrane of the present invention comprises a cationic block copolymer (P) having a vinyl alcohol polymer block (A) and a cationic-group containing polymer block (B) as components; and an anionic block copolymer (Q) having a vinyl alcohol polymer block (C) and anionic-group containing polymer block (D) as components.
That is, a charge-mosaic membrane of the present invention has a cationic polyvinyl alcohol block copolymer and an anionic polyvinyl alcohol block copolymer as ion-exchange regions. The cationic block copolymer acts as an anion-exchange resin whereas the anionic block copolymer acts as a cation-exchange resin.
A polyvinyl alcohol cationic block copolymer used in the present invention is a cationic block copolymer (P) having a vinyl alcohol polymer block (A) and a cationic-group containing polymer block (B) as components.
There are no particular restrictions to a repeating unit constituting a polymer block (B) in a cationic block copolymer (P), but examples include repeating units represented by general formulas (2) to (7).
[chem.1]

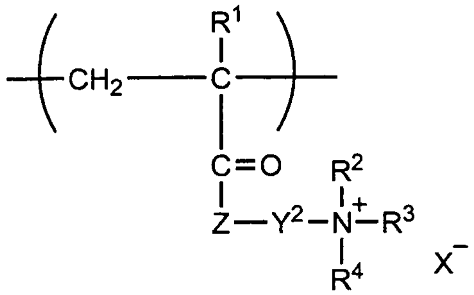

(2)

wherein $R^1$ represents hydrogen or alkyl group having 1 to 4 carbon atoms; $R^2$, $R^3$ and $R^4$ independently of each other represent hydrogen or optionally substituted alkyl group, aryl group or aralkyl group having 1 to 18 carbon atoms which are optionally combined to form a saturated or unsaturated cyclic structure; Z represents -O- or NH; $Y^2$ represents a divalent linking group having 1 to 8 carbon atoms in total which can be interrupted by a heteroatom; and $X^-$ represents an anion.
[chem. 2]

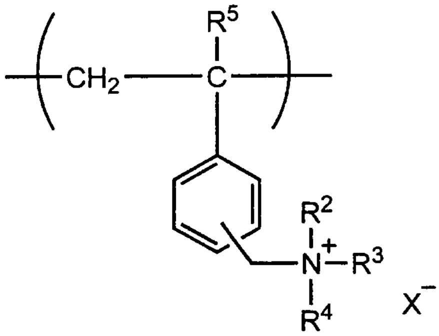

(3)

wherein $R^5$ represents hydrogen or methyl group; and $R^2$, $R^3$, $R^4$ and $X^-$ are as defined in general formula (2).

[chem.3]

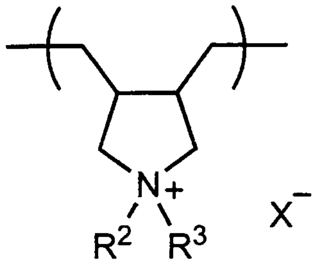

(4)

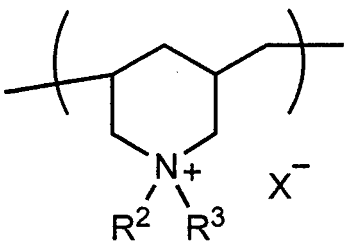

(5)

In general formulas (4) and (5), $R^2$, $R^3$ and $X^-$ are as defined in general formula (2).

[chem. 4]

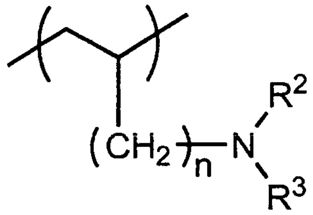

(6)

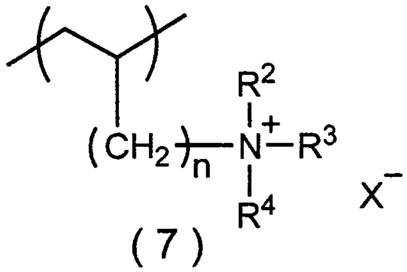

(7)

In general formulas (6) and (7), n represents 0 or 1; and $R^2$, $R^3$, $R^4$ and $X^-$ are as defined in general formula (2).

Examples of a monomer having a cationic group used in synthesis of the cationic block copolymer (P) represented by general formula (1) as above include

trimethyl-p-vinylbenzylammonium chloride,
trimethyl-m-vinylbenzylammonium chloride,
triethyl-p-vinylbenzylammonium chloride,
triethyl-m-vinylbenzylammonium chloride,
N,N-dimethyl-N-ethyl-N-p-vinylbenzylammonium chloride,
N,N-diethyl-N-methyl-N-p-vinylbenzylammonium chloride,
N,N-dimethyl-N-n-propyl-N-p-vinylbenzylammonium chloride,
N,N-dimethyl-N-n-octyl-N-p-vinylbenzylammonium chloride,
N,N-dimethyl-N-benzyl-N-p-vinylbenzylammonium chloride,
N,N-diethyl-N-benzyl-N-p-vinylbenzylammonium chloride,
N,N-dimethyl-N-(4-methyl)benzyl-N-p-vinylbenzylammonium chloride, N,N-dimethyl-N-phenyl-N-p-vinylbenzylammonium chloride, trimethyl-p-vinylbenzylammonium bromide,
trimethyl-m-vinylbenzylammonium bromide,
trimethyl-p-vinylbenzylammonium sulfonate,
trimethyl-m-vinylbenzylammonium sulfonate,
trimethyl-p-vinylbenzylammonium acetate,
trimethyl-m-vinylbenzylammonium acetate,
N,N,N-triethyl-N-2-(4-vinylphenyl)ethylammonium chloride,
N,N,N-triethyl-N-2-(3-vinylphenyl)ethylammonium chloride,
N,N-diethyl-N-methyl-N-2-(4-vinylphenyl)ethylammonium chloride, and
N,N-diethyl-N-methyl-N-2-(4-vinylphenyl)ethylammonium acetate.

Additional examples include N,N-dialkyl aminoalkyl (meth)acrylates (for example, N,N-dimethylaminoethyl (meth)acrylate, N,N-diethylaminoethyl (meth)acrylate, N,N-dimethylaminopropyl (meth)acrylate and N,N-diethylaminopropyl (meth)acrylate) and N,N-dialkyl aminoalkyl (meth)acrylamides (for example, N,N-dimethylaminoethyl (meth)acrylamide, N,N-diethylaminoethyl (meth)acrylamide, N,N-dimethylaminopropyl (meth)acrylamide and N,N-diethylaminopropyl (meth)acrylamide) quaternized with an alkyl halide (for example, methyl chloride, ethyl chloride, methyl bromide, ethyl bromide, methyl iodide or ethyl iodide), or sulfonates, alkylsulfonates, acetates or alkylcarboxylates produced by replacing an anion in the quaternized compound with a corresponding anion.

Additional examples include monomethyldiallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride,

triethyl-2-(acryloyloxy)ethylammonium chloride, trimethyl-3-(methacryloyloxy)propylammonium chloride, triethyl-3-(methacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate. Furthermore, examples of a copolymerizable monomer can include N-vinylimidazole and N-vinyl-2-methylimidazole.

There are no particular restrictions to a content of a cationic group in a cationic block copolymer (P), but it is preferable that a content of a cationic monomer, that is, a proportion of the number (molar number) of a monomer unit having a cationic group (cationic monomer unit) to the total number (molar number) of monomer units in the cationic block copolymer (P) is 0.1 mol% or more. If a content of a cationic monomer unit is less than 0.1 mol%, an effective charge density in a charge-mosaic membrane may be reduced, leading to deterioration in electrolyte permselectivity. The content is more preferably 0. 5 mol% or more, further preferably 1 mol% or more. A content of a cationic monomer is preferably 50 mol% or less. If the content is more than 50 mol%, a charge-mosaic membrane may be so swollen that an electrolyte permeation flux may be reduced. The content is more preferably 30mol%orless, further preferably 20mol% or less. When a cationic polyvinyl alcohol block copolymer (P) is a mixture of a cationic-group containing polymer and a cationic-group-free polymer or amixture of a several kinds of cationic-group containing polymers, a content of a cationic monomer is a proportion of the number of the cationic monomer unit to the total number of monomer units in the mixture.

A polyvinyl alcohol anionic block copolymer used in the present invention is an anionic block copolymer (Q) having a vinyl alcohol polymer block (C) and an anionic-group containing polymer block (D) as components.

There are no particular restrictions to a repeating unit constituting a polymer block (D) in an anionic block copolymer (Q), but repeating units represented general formulas (9) to (10).

[chem. 5]

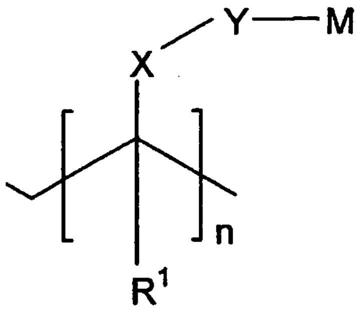

(9)

[chem. 6]

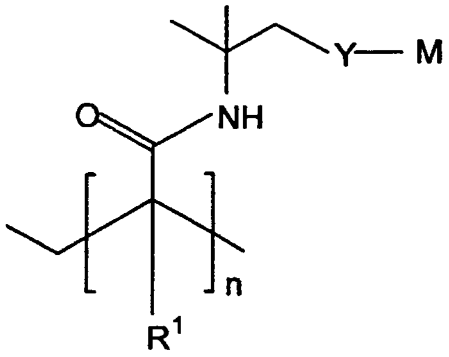

(1 0)

In general formulas (9) and (10), $R^1$ represents hydrogen or methyl group; X represents phenylene group or naphthylene group optionally substituted with methyl group; Y represents sulfonyloxy group ($-SO_3-$), phosphonyloxy group ($-PO_3H-$) or carbonyloxy group ($-CO_2-$); and M represents hydrogen, ammonium ion or an alkali metal ion.

Y in general formulas (9) and (10) is preferably sulfonyloxy group or phosphonyloxy group, which gives a higher charge density. Examples of an alkali metal ion in the definition of M include sodium, potassium and lithium ions.

Among the monomers having an anionic group which is used for synthesis of an anionic block copolymer (Q), examples of a monomer constituting the repeating unit represented by general formula (9) include p-styrenesulfonic acid or its alkali metal salts or ammonium salt, p-styrenephosphonic acid or its alkali metal salts or ammonium salt, p-styrenecarboxylic acid or its alkali metal salts or ammonium salt, α-methyl-p-styrenesulfonic acid or its alkali metal salts or ammonium salt, α-methyl-p-styrenephosphonic acid or its alkali metal salts or ammonium salt, α-methyl-p-styrenecarboxylic acid or its alkali metal salts or ammonium salt, 2-vinylnaphthalenesulfonic acid or its alkali metal salts or ammonium salt, 2-vinylnaphthalenephosphonic acid or its alkali metal salts or ammonium salt, and 2-vinylnaphthalenecarboxylic acid or its alkali metal salts or ammonium salt.

Among the monomers having an anionic group which is used for synthesis of an anionic block copolymer (Q), examples of a monomer constituting the repeating unit represented by general formula (10) include2-(meth)acrylamido-2-methylpropanesulfonic acid or its alkali metal salts or ammonium salt, 2-(meth)acrylamido-2-methylpropanephosphone or its alkali metal salts or ammonium salt, and 2-(meth)acrylamido-2-methylpropanecarboxylic acid or its alkali metal salts or ammonium salt.

There are no particular restrictions to a content of an anionic group in an anionic block copolymer (Q), but it is preferable that a content of an anionic monomer, that is, a proportion of the number (molar number) of a monomer unit having an anionic group to the total number (molar number) of monomer units in the anionic block copolymer (Q) is 0.1 mol% or more. If a content of an anionic monomer is less than 0.1 mol%, an effective charge density in a charge-mosaic membrane may be reduced, leading to deterioration in electrolyte permselectivity. The content is more preferably 0.5 mol% or more, further preferably 1 mol% or more. A content of an anionic monomer is preferably 50 mol% or less. If the content is more than 50 mol%, a charge-mosaic membrane may be so swollen that an electrolyte permeation flux may be reduced. The content is more preferably 30 mol% or less, further preferably 20 mol% or less. When an anionic polyvinyl alcohol block copolymer is a mixture of an anionic-group containing polymer and an anionic-group-free polymer or a mixture of a plurality types of anionic-group containing polymers, a content of an anionic monomer is a proportion of the number of the anionic monomer unit to the total number of monomer units in the mixture.

A charge-mosaic membrane of the present invention is **characterized in that** it contains a cationic polyvinyl alcohol block copolymer and an anionic polyvinyl alcohol block copolymer as domains. An important property of the charge-mosaic membrane is a negative osmosis phenomenon. A negative osmosis phenomenon denotes a phenomenon occurring when solutions are separated by a membrane: a cationic or anionic solute is permeable while a neutral substance such as water is permeable little. Specifically, when an aqueous solution of KCl and water are separated by a membrane, KCl with hydration water moves to the water side. This phenomenon occurs because a salt permeation flux via the membrane is larger than a water permeation flux, and a membrane in which such a phenomenon occurs can act as a desalination membrane by applying an adequate pressure. Generally, separability between a solute and a solvent is expressed by a reflection coefficient, which is positive in a positive osmosis phenomenon. On the other hand, a reflection coefficient is negative in a negative osmosis phenomenon. The reflection coefficient is influenced by a charge density in a membrane and a domain size. Furthermore, a reflection coefficient is calculated by a complicated procedure, but whether osmosis is positive or negative can be simply determined by measuring a water permeation flux in a water permeation test. Here, in order to increase a charge density, it is important to reduce swelling as much as possible while a charge amount is increased in a membrane.

A cationic block copolymer (P) as one of main components of a charge-mosaic membrane of the present invention is having a vinyl alcohol polymer block (A) and a cationic-group containing polymer block (B) as components. An anionic block copolymer (Q) as another main component is having a vinyl alcohol polymer block (C) and an anionic-group containing polymer block (D) as components. Roles are shared between the polyvinyl alcohol blocks ((A) and (C)) as crystalline polymers responsible for overall membrane strength, reduction of membrane swelling and shape retention, and the cationic block (B) permeable by anions and the anionic block (D) permeable by cations. As a result, a charge-mosaic membrane in which both swelling reduction and dimensional stability are successfully achieved can be provided.

A cationic block polymer (P) and an anionic block polymer (Q) as main components of a charge-mosaic membrane of the present invention can be produced by any of two general processes, that is, (1) producing a block copolymer using at least one monomer having an ion-exchange group and another monomer and (2) producing a block copolymer, followed by introduction of an ion-exchange group. For (1) of these processes, in the light of industrial convenience, it is preferable to produce a block copolymer by radical polymerization of a vinyl alcohol polymer containing a terminal mercapto group with at least one monomer containing an ion-exchange group. For (2), a block copolymer containing an ion-exchange group can be produced by block co-polymerization of a vinyl alcohol polymer containing a terminal mercapto group with one or more monomers, followed by introduction of an ion-exchange group into a resulting block copolymer. In particular, it is preferable to produce a block copolymer by radical polymerization of a vinyl alcohol polymer containing a terminal mercapto group with at least one monomer having an ion-exchange group because the types and the amounts of components for a vinyl alcohol polymer block and a polymer block containing an ion-exchange group can be easily controlled.

There will be described a process for producing a desired block copolymer using at least one monomer having an ion-exchange group and another monomer, which is suitably used in the present invention.

A vinyl alcohol polymer containing a terminal mercapto group can be prepared, for example, as described in Patent Reference No. 4. Specifically, it can be prepared, for example, by radically polymerizing a vinyl ester monomer such as a vinyl monomer mainly containing vinyl acetate in the presence of a thiol acid to provide a vinyl ester polymer, which is then saponified.

A saponification degree of a vinyl alcohol polymer containing a terminal mercapto group is preferably, but not limited to, 40 to 99.9 mol%. If a saponification degree is less than 40 mol%, a vinyl alcohol polymer block is less crystalline and thus strength of an ion-exchange membrane may be insufficient. A saponification degree described above is more preferably 60 mol% or more, further preferably 80 mol% or more. A saponification degree of a vinyl alcohol polymer containing a terminal mercapto group is generally 99.9 mol% or less. A saponification degree of a polyvinyl alcohol is measured in accordance with JIS K6726.

A polymerization degree of a vinyl alcohol polymer containing a terminal mercapto group is preferably 100 or more and 3500 or less, more preferably 200 or more and 3000 or less, further preferably 250 or more and 2500 or less. If a polymerization degree is less than 100, a final product, a charge-mosaic membrane containing the block copolymer as a main element, may have an insufficient membrane strength. If a polymerization degree is more than 3500, mercapto groups are inadequately introduced to the vinyl alcohol polymer, so that a block polymer may not be efficiently obtained. A viscosity average polymerization degree of a polyvinyl alcohol is measured in accordance with JIS K6726.

A vinyl alcohol polymer containing a terminal mercapto group thus prepared and a monomer containing an ion-exchange group are used to provide a block copolymer by an appropriate process such as that described in Patent Reference No. 5.

That is, for example, as described in Patent Reference No. 5, a block copolymer can be produced by radically polymerizing an ion-exchange-group containing monomer in the presence of a vinyl alcohol polymer containing a terminal mercapto group. This radical polymerization can be conducted by any known method such as bulk polymerization, solution polymerization, pearl polymerization and emulsion polymerization, and preferably conducted in a solvent which can dissolve the vinyl alcohol polymer containing a terminal mercapto group, such as a water or dimethyl sulfoxide based medium. The polymerization process can be any of batch, semi-batch and continuous types.

The above radical polymerization can be conducted using a radical polymerization initiator suitable for polymerization selected from common initiators such as 2,2'-azobisisobutyronitrile, benzoylperoxide, lauroylperoxide, diisopropyl peroxycarbonate, potassium persulfate and ammonium persulfate. In aqueous polymerization, polymerization can be initiated by a redox reaction of a terminal mercapto group in the vinyl alcohol polymer with an oxidizing agent such as potassium bromate, potassium persulfate, ammonium persulfate and hydrogen peroxide.

A polymerization system is desirably acidic for radical polymerization of a monomer containing an ion-exchange group in the presence of a vinyl alcohol polymer containing a terminal mercapto group. It is because under a basic condition, the mercapto group disappears due to its ionic addition to a double bond in the monomer so rapidly that a polymerization efficiency is considerably reduced. In an aqueous polymerization, it is preferable to conduct all of the polymerization steps at a pH of 4 or less.

When the cationic block copolymer (P) and the anionic block copolymer (Q) described above are synthesized, an ion-exchange-group containing polymer block ((B) and (D)) desirably consists of a monomer unit containing an ion-exchange group to endow a charge-mosaic membrane of the present invention with higher salt-permeability, but it can contain a monomer unit without an ion-exchange group. Examples of a monomer giving such a monomer unit without an ion-exchange group include α-olefins such as ethylene, propylene, 1-butene, isobutene and 1-hexene; acrylic acid or its salts, or acrylates such as methyl acrylate, ethyl acrylate, n-propyl acrylate and isopropyl acrylate; methacrylic acid or its salts or methacrylates such as methyl methacrylate, ethyl methacrylate, n-propyl methacrylate and isopropyl methacrylate; acrylamide derivatives such as acrylamide, N-methylacrylamide and N-ethylacrylamide; methacrylamide derivatives such as methacrylamide, N-methylmethacrylamide and N-ethylmethacrylamide; vinyl ethers such as methyl vinyl ether, ethyl vinyl ether, n-propyl vinyl ether, isopropyl vinyl ether and n-butyl vinyl ether; hydroxyl group containing vinyl ethers such as ethyleneglycol vinyl ether, 1,3-propanediol vinyl ether and 1, 4-butanediol vinyl ether; allyl ethers such as allyl acetate, propyl allyl ether, butyl allyl ether and hexyl allyl ether; oxyalkylene group containing monomers; hydroxyl group containing α-olefins such as isopropenyl acetate, 3-buten-1-ol, 4-penten-1-ol, 5-hexen-1-ol, 7-octen-1-ol, 9-decen-1-ol and 3-methyl-3-butene-1-ol; and silyl group containing monomers such as vinyltrimethoxysilane, vinyltriethoxysilane and vinyltriacetoxysilane. A monomer unit containing an ion-exchange group is preferably contained in the polymer block in a proportion of 80 mol% or more, particularly 90 mol% or more.

There are no particular restrictions to a reaction temperature of the above radical polymerization, which is properly 0 to 200 °C. Timing of quenching the polymerization reaction can be determined by tracing polymerization progress by means of quantitative measurement of a residual monomer using, for example, any of various chromatographic methods and NMR spectrometry to attain a desired ratio of a polymer block (A) to a polymer block (B) or of a polymer block (C) to a polymer block (D). The polymerization reaction is quenched by any known procedure such as cooling of a polymerization system.

For adequate ion permeability for the use as a charge-mosaic membrane for piezodialysis, a membrane made of a cationic block copolymer (P) and a membrane made of an anionic block copolymer (Q) used for individual ion-exchange regions has a charge density of preferably 0.3 mol $\cdot dm^{-3}$ or more, more preferably 0.5 mol $\cdot dm^{-3}$ or more, further preferably 0.7 mol $\cdot dm^{-3}$ or more. If a charge density is less than 0.3 mol$\cdot dm^{-3}$, a membrane may have inadequate ion permeability. The upper limit of a charge density of the membrane made of a block copolymer is preferably 3 mol $\cdot dm^{-3}$ more preferably 2.7 mol $\cdot dm^{-3}$, further preferably 2.5 mol $\cdot dm^{-3}$ in the light of mechanical strength and the like. If a charge density is 3 mol $\cdot dm^{-3}$ or more, the membrane may be so hydrophilic that swelling cannot be controlled, leading to poor salt permeability.

A ratio (a)/(b) of a charge density (a) of a polyvinyl alcohol cationic block copolymer (P) to a charge density (b) of a polyvinyl alcohol anionic block copolymer (Q) is, but not limited to, preferably 0.3 to 2.5, more preferably 0.5 to 2.0, further preferably 0.8 to 1.5. If the ratio (a)/(b) is less than 0.3 or 2.5 or more, a charge density in a charge-mosaic membrane may be badly balanced and thus cation permeability and anion permeability may be badly balanced in the membrane, leading to reduction in a water permeation flux and a salt permeation flux.

As a preferable example of a process for producing a block copolymer, first, a block copolymer containing the vinyl alcohol polymer block as described above and a block into which an ion-exchange group can be introduced, and then an ion-exchange group is introduced into the latter block.

A block copolymer into which a cationic group can be introduced can be prepared as described in the process for producing a cationic block copolymer (P) using a vinyl alcohol polymer containing a mercapto group and an ion-exchange-group containing monomer, replacing an ion-exchange-group (that is, a cationic group) containing monomer with a monomer having a moiety into which a cationic group can be introduced. Examples of a monomer having a moiety into which a cationic group can be introduced include vinylpyridines such as 2-vinylpyridine, 4-vinylpyridine and 2-methyl-5-vinylpyridine; vinylpyrimidines; vinylquinolines; vinylcarbazoles; vinylimidazoles; o,m,p-vinylphenylalkylenealkylamines; dialkylaminoalkyl acrylates; and dialkylaminoalkyl acrylates.

For introducing a cationic group into a block copolymer having a moiety into which a cationic group can be introduced, the block copolymer can be treated with vapor or a solution of an alkyl halide compound to quaternize a nitrogen atom in the copolymer. Here, an alkyl halide compound used can be a compound represented by $C_pH_{2p+1}X$ or $X(CH_2)_qX$ wherein p is an integer of 1 to 12, q is an integer of 2 to 12, and X is bromine or iodine. A cationic group can be introduced into a block having a halomethyl group by treating it with a trialkyl amine.

A charge-mosaic membrane of the present invention preferably has a thickness of about 1 to 1000 μm in the light of ensuring, for example, performance, membrane strength and handling properties required as a membrane for piezodialysis. If a thickness is less than 1 μm, the membrane tends to have insufficient mechanical strength. On the other hand, if a thickness is more than 1000 μm, a membrane resistance is so increased that the membrane cannot exhibit adequate salt permeability and thus a desalting efficiency tends to be reduced. A membrane thickness is more preferably 5 to 500 μm, further preferably 7 to 300 μm.

A charge-mosaic membrane of the present invention is preferably annealed. Annealing promotes microphase separation of block components and formation of ion permeation channel. Furthermore, annealing causes physical crosslinking, so that a charge-mosaic membrane formed can have increased mechanical strength. Annealing is generally, but not limited to, conducted using a hot-air dryer. A annealing temperature is preferably, but not limited to, 100 to 250

°C. If a annealing temperature is lower than 100 °C, a charge-mosaic membrane obtained may not have a separated phase structure and may have insufficient mechanical strength. The temperature is more preferably 110 °C or higher, further preferably 120 °C or higher. If a annealing temperature is higher than 250 °C, a crystalline polymer may melt. The temperature is more preferably 230 °C or lower, further preferably 200 °C or lower.

It is preferable that a charge-mosaic membrane of the present invention is subjected to a crosslinking treatment. By subjecting a crosslinking treatment, mechanical strength of a membrane formed can be increased. There are no particular restrictions to a crosslinking method as long as it can chemically bond molecular chains in a polymer. The method is generally immersing a membrane in a solution containing a crosslinking agent. Examples of such a crosslinking agent include glutaraldehyde, formaldehyde and glyoxal. A concentration of the crosslinking agent is generally 0.001 to 1 vol% as a volume concentration of a crosslinking agent to a solution.

In producing a charge-mosaic membrane of the present invention, annealing and crosslinking can be conducted alone or in combination. When both annealing and crosslinking are conducted, crosslinking can be conducted after annealing, annealing can be conducted after crosslinking, or alternatively these can be simultaneously conducted. Conducting crosslinking after annealing is preferable in the light of mechanical strength of a charge-mosaic membrane obtained.

A charge-mosaic membrane of the present invention can contain a variety of additives including water-soluble resins such as polyvinyl alcohol and polyacrylamide and inorganic fillers as long as they do not make the present invention ineffective.

A charge-mosaic membrane used in the present invention can be combined with a support to be a composite membrane. The support used can be any of conventionally known porous sheets. Examples of a porous support include nonwoven fabrics, membranes, textile fabrics and synthetic papers. Among these supports, particularly preferred are nonwoven fabrics, membranes and synthetic papers.

## EXAMPLES

There will be further detailed the present invention with reference to Examples, but the present invention is not limited to these examples. In the examples, unless otherwise indicated, "%" and "part(s)" are by weight.

### Reference Example (Synthesis of a polyvinyl alcohol containing a terminal mercapto group)

A polyvinyl alcohol (PVA-1) containing a terminal mercapto group shown in Table 1 was synthesized as described in JP 59-187003 A.

[Table 1]

| | Polymerization degree | Saponification degree (mol%) | Terminal group |
|---|---|---|---|
| PVA-1 | 1550 | 98.5 | Mercapto group |

Properties of the charge-mosaic membranes in Examples and Comparative Examples were measured as described below.

### 1) Determination of a charge density from a membrane potential test

In a membrane potential test, a membrane potential was measured, using measurement cells shown in FIG. 1, varying a KCl (Nacalai Tesque, Inc.) concentration of both cells while maintaining a concentration ratio of these cells r = 5. Apotential is reported in relation to a higher concentration cell as a reference. Relationship between the aqueous KCl solution in a lower concentration cell and a measured membrane potential was analyzed using a Teorell-Meyer and Sievers theoretical formula (TMS theory) as shown in formula (I), to calculate a membrane charge density. Measurement was conducted at 25 °C.

[math. 1]

$$\Delta\Phi = -\frac{RT}{F}\ln\left(r\frac{\sqrt{C_x^2+(2C_0)^2}-C_x}{\sqrt{C_x^2+(2rC_0)^2}-C_x}\right)-\frac{RT}{F}W\ln\left(\frac{\sqrt{C_x^2+(2rC_0)^2}-C_xW}{\sqrt{C_x^2+(2C_0)^2}-C_xW}\right) \quad (I)$$

wherein

$$W = (\omega_c-\omega_a)/(\omega_c+\omega_a);$$

$\Delta\phi$: membrane potential [V];
Cx: membrane charge density (including a sign of a charged group) [mol $\cdot m^{-3}$];
$C_0$: salt concentration in a lower concentration cell [mol $\cdot m^{-3}$];
$\omega_c$: cation mobility [mol$\cdot m^2 \cdot J^{-1} \cdot s^{-1}$];
$\omega_a$: anion mobility [mol$\cdot m^2 \cdot J^{-1} \cdot s^{-1}$];
F: Faraday constant [C$\cdot mol^{-1}$];
R: gas constant [$J \cdot K^{-1} \cdot mol^{-1}$]; and
T: absolute temperature [K].

2) Determination of a water permeation flux from a water permeation test

A water permeation test was conducted using an apparatus consisting of a permeating water measurement cell and a graduated capillary shown in FIG. 2. A membrane sample for measurment was placed between self-made cells, and the left cell was filled with about 20 mL of a $5.0\times10^{-2}$ to $5.0\times10^{-1}$ (mol/L) solution of KCl while the right cell was filled with about 20 mL of deionized water, a capillary was set and then measurement was initiated. Measurement was conducted at 25 °C. Variation of a capillary meniscus position at a predetermined time "t" was measured to determine a moving distance of water, from which was calculated the molar number (n) of moved water. An initial slope of a graph of the molar number (n) of moved water vs a time (t) was divided by a cross-sectional area of the capillary to determine a volumetric flow rate [$m \cdot s^{-1}$] of water. From the results, a permeation flux $J_w$ [mol $\cdot m^{-2} \cdot s^{-1}$] of water was calculated from following equation (II).
$$J_W = J_V/18\times10^6 \qquad (II)$$

$J_V$: volumetric flow rate [$m \cdot s^{-1}$]

3) Determination of a salt permeation flux by a piezodialysis test

For determining a salt permeation flux by a piezodialysis test, composite membranes were prepared from the charge-mosaic membranes obtained in Examples and Comparative Examples and evaluated. A composite membrane was produced by piling a vinylon synthetic paper (basis weight: $50\pm5$ g/m$^2$, thickness: $160\pm25$ $\mu$m) and a charge-mosaic membrane and hot-pressing by a hot press under the conditions of a temperature of 150 °C and a pressure of 10 Kg/cm$^2$ for 10 min. Next, a piezodialysis test was conducted using a piezodialysis measurement cell shown in FIG. 3. A membrane held by a folder was sandwiched by two cells. The right cell (pressing side) was filled with 50 mL of a 35,000 ppm aqueous solution of NaCl while the left cell (open side) was filled with 50 mL of a 35,000 ppm aqueous solution of NaCl, and while stirring the solutions in both cells with stirrers, a conductivity in the open-side cell was measured once a minute for 100 min under the conditions of a right-cell pressure of 3 MPa and a constant temperature of 25 °C. Then, an NaCl concentration in the open-side cell was determined from a conductivity obtained using a preliminarily formed NaCl-conductivity calibration curve. From the results, a salt permeation flux per a unit time and a unit area (mol/(m$^2\cdot$s)) was calculated.

First, cationic block copolymers (P) acting as an anion-exchange resin: P-1 to P-5, P-7, P-9 and P-10, a random copolymer having a cationic group: P-11, anionic block copolymers (Q) acting as a cation-exchange resin: P-12 to P-16, and random copolymers having an anionic group: P-17, P-18 were synthesized.

(Synthesis of P-1)

In a 5-liter four-necked separable flask equipped with a reflux condenser and a stirring blade were charged 1140 g of water and 344 g of PVA-1 shown in Table 1 as a vinyl alcohol polymer containing a terminal mercapto group, and the mixture was heated with stirring to 95 °C for dissolving the vinyl alcohol polymer and then cooled to room temperature. To the aqueous solution was added 1/2 N sulfuric acid to adjust pH to 3.0. Separately, 183 g of methacrylamidepropyl trimethylammonium chloride was dissolved in 220 g of water, and the resulting solution was added to the previous aqueous solution with stirring, and then the mixture was heated to 70 °C while the system atmosphere was replaced by nitrogen by bubbling nitrogen gas into the aqueous solution for 30 min. After the replacement by nitrogen, to the aqueous solution was added portionwise 176 mL of a 2. 5 % aqueous solution of potassium persulfateover1.5hourstoinitiateblockco-polymerizationwhich was then allowed to proceed. The polymerization was allowed to further proceed by maintaining a system temperature at 75 °C for one hour, and the reaction was then cooled to give an aqueous solution of PVA-(b)-p-methacrylamidepropyl trimethylammonium chloride block copolymer with a solid content of 15 %. Apart of the resulting aqueous solution was dried, then dissolved in deuterium oxide and analyzed by $^1$H-NMR at 4 00 MHz, which indicated that the vinyl alcohol polymer was modified with the methacrylamidepropyl trimethylammonium chloride unit in 10 mol%.

(Synthesis of P-2 to P-6, P-8, P-10, P-12 to 16)

P-2 to P-6, P-8, P-10, P-12 to P-16 were produced as described for P-1, except that the polymerization conditions such as the type and the amount of a vinyl alcohol polymer containing a terminal mercapto group, the type and the amount of a cationic-group containing monomer and the amount of a polymerization initiator were changed as shown in Tables 2 and 3. Physical properties of polymers obtained are shown in Tables 2 and 3.
[Table 2]

| | Polymerization conditions | | | | | | | | | Block polymer (P) | |
|---|---|---|---|---|---|---|---|---|---|---|---|
| | PVA polymer | | Cationic-group containing) monomer[1)] | | Water (g) | Initiator, KPS | | Polymerization time (hr) | Solid concentration (%) | 4% viscosity (mPa·s) | Modified amount (mol%) |
| | Type | Amount (g) | Type | Amount (g) | | Concentration (wt) | Amount (mL) | | | | |
| P-1 | PVA-1 | 344 | MAPTAC | 183 | 2650 | 2.5 | 121 | 1.5 | 15 | 16 | 10 |
| P-2 | PVA-1 1 | 344 | VTMAC | 285 | 3400 | 2.5 | 121 | 1.5 | 15 | 18 | 15 |
| P-3 | PVA-1 | 344 | VTMAC | 89.6 | 2250 | 2.5 | 121 | 1.5 | 15 | 16 | 5 |
| P-4 | PVA-1 1 | 344 | VTMAC | 35.8 | 1950 | 2.5 | 121 | 1.5 | 15 | 14 | 2 |
| P-5 | PVA-1 1 | 344 | DADMAC | 134 | 2700 | 2.5 | 121 | 1.5 | 15 | 18 | 10 |
| P-6 | PVA-1 | 344 | NVF | 48 | 2000 | 2.5 | 121 | 1.5 | 15 | 16 | 10 |
| P-8 | PVA-1 | 344 | Vpy | 89 | 2250 | 2.5 | 121 | 1.5 | 15 | 16 | 10 |
| P-10 | PVA-1 | 344 | VTMAC | 7 | 1800 | 2.5 | 121 | 1.5 | 15 | 14 | 0.4 |

1) MAPTAC: methacrylamide propyltrimethylammonium chloride, DADMAC: diallyldimethylammonium chloride, VBTMAC: vinylbenzyltrimethylammonium chloride, NVF: N-vinylformamide, VPy: 2-vinylpyridine

[Table 3]

| | Polymerization conditions | | | | | | | | | Block polymer (P) | |
|---|---|---|---|---|---|---|---|---|---|---|---|
| | PVA polymer | | Anionic-group containing monomer | | Water (g) | Initiator, KPS | | Polymerization time (hr) | Solid concentration (%) | 4% viscosity (mPa·s) | Modified amount (mol%) |
| | Type | Amount (g) | Type | Amount (g) | | Concentration (wt) | Amount (mL) | | | | |
| P-12 | PVA-1 | 344 | AMPS | 190 | 2700 | 2.5 | 121 | 1.5 | 15 | 16 | 10 |
| P-13 | PVA-1 1 | 344 | PStSS | 275 | 3300 | 2.5 | 121 1 | 1.5 | 15 | 18 | 15 |
| P-14 | PVA-1 | 344 | PStSS | 86 | 2200 | 2.5 | 121 1 | 1.5 | 15 | 16 | 5 |
| P-15 | PVA-1 | 344 | PStSS | 34 | 1920 | 2.5 | 121 1 | 1.5 | 15 | 14 | 2 |
| P-16 | PVA-1 | 344 | PStSS | 7 | 1800 | 2.5 | 121 | 1.5 | 15 | 14 | 0.4 |

1) PStSS: sodium p-styrenesulfonate, AMPS: sodium 2-acrylamido-2-methylpropanesulfonate

(Synthesis of P-7: hydrolysis of P-6)

To a 15 % aqueous solution of P-6 was added sodium hydroxide to 0.08 mol%, and the mixture was hydrolyzed by heating at 110 °C for one hour to prepare an aqueous solution of a PVA- (b) -vinylamine block copolymer with a solid concentration of 14% (A part of the resulting aqueous solution was dried, then dissolved in deuterium oxide and analyzed by $^1$H-NMR at 400 MHz. As a result, the polymer was modified with the vinylamine unit in 10 mol%.). A viscosity of a 4 % aqueous solution was 16 mPa·s (20 °C) as measured by a B type viscometer.

(Synthesis of P-9: quaternization of P-8)

An aqueous solution of P-8 was applied on an acrylic cast plate with 270 mm long × 210 mm wide and, after removing an excessive solution and bubbles, dried on a hot plate at 50 °C for 24 hours to form a film. The film thus formed was treated in methyl iodide vapor at room temperature for 10 hours for quaternizing a vinylpyridine moiety to provide a PVA-(b)-quaternized vinylpyridine block copolymer film (A part of the resulting film was dissolved in deuterium oxide and analyzed by $^1$H-NMR at 400 MHz. As a result, the polymer was modified with the quaternized vinylpyridine unit in 10 mol%.). A viscosity of an aqueous solution whose concentration was adjusted to 4 % was 16 mPa·s (20 °C) as measured by a B type viscometer.

(Synthesis of P-11)

To a 6 L separable flask equipped with a stirrer, a temperature sensor, a dropping funnel and a reflux condenser were charged 1960 g of vinyl acetate, 820 g of methanol and 23 g of a 30 % by weight solution of methacrylamide propyltrimethylammonium chloride in methanol, and after the atmosphere of the system was substituted by nitrogen under stirring, the system was heated to an internal temperature of 60 °C. To this system was added 20 g of methanol containing 0.4 g of 2,2'-azobisisobutyronitrile, to initiate a polymerization reaction. The polymerization reaction was continued for 4 hours while 300 g of a 30% by weight solution of methacrylamide propyltrimethylammonium chloride in methanol was added to the reaction system from the initiation of the polymerization, and then the polymerization reaction was quenched. At the quenching of the polymerization reaction, a solid concentration in the system, that is, a solid content to the whole polymerization reaction slurry, was 22.3 % by weight. Next, unreacted vinyl acetate monomer was expelled by introducing methanol vapor into the system to provide a 55 % by weight solution of a vinyl ester copolymer in methanol.

To the 55 % by weight solution of a vinyl ester copolymer in methanol were, under stirring, sequentially added methanol and a 10 % by weight solution of sodium hydroxide in methanol such that a molar ratio of sodium hydroxide to a vinyl acetate unit in the copolymer was 0.025 and the vinyl ester copolymer was contained in a solid concentration of 30 % by weight, and a saponification reaction was initiated at 40 °C.

Immediately after a gelated material was formed as the saponification reaction proceeded, the material was removed from the reaction system and pulverized, and then one hour after the formation of the gelated material, the pulverized material was neutralized by adding methyl acetate to provide a swollen cationic polymer of poly(vinyl alcohol-methacrylamide propyltrimethylammonium chloride). Six times the mass of methanol was added to the swollen cationic polymer (liquor ratio: 6), and the polymer was washed under reflux for one hour, and then the polymer was collected by filtration. The polymer was dried at 65 °C for 16 hours. The resulting polymer was dissolved in deuterium oxide and analyzed by $^1$H-NMR at 400 MHz. As a result, the polymer was modified with the methacrylamide propyltrimethylammonium chloride unit in 5 mol%. Apolymerization degree was 1500 and a saponification degree was 98.5 mol%.

(Synthesis of P-17 and P-18)

P-17 and P-18 were produced as described for P-11, except that the polymerization conditions such as the types and the amounts of vinyl acetate (VAc), methanol (MeOH) and an ionic-group containing monomer, the amount of a polymerization initiator and the portionwise addition condition of the ionic-group containing monomer and the conditions of a saponification reaction were changed as shown in Table 4. The physical properties of polymers obtained are shown in Table 4.

[Table 4]

| | Polymerization conditions | | | | | | | | | Saponification conditions | | Vinyl alcohol polymer | | |
|---|---|---|---|---|---|---|---|---|---|---|---|---|---|---|
| | VAc (g) | Ionic-group containing monomer | | | | MeOH (g) | AIBN (g) | Polymerization time (hr) | Solid concentration (wt%) | Saponification concentration (wt%) | NaOH molar ratio | Saponification (mol%) | Polymerization degree | Modified amount (mol%) |
| | | Type[1)] | MeOH solution concentration (%) | Initial amount (g) | Portion wise addition amount (g) | | | | | | | | | |
| P-11 | 1960 | MAPTAC | 30 | 23 | 300 | 840 | 0.4 | 4 | 22.3 | 30 | 0.025 | 98.5 | 1500 | 5 |
| P-17 | 1960 | AMPS | 25 | 27 | 152 | 840 | 0.4 | 4 | 21.3 | 30 | 0.025 | 98.5 | 1600 | 2 |
| P-18 | 1960 | AMPS | 25 | 70 | 390 | 840 | 0.4 | 4 | 21.7 | 30 | 0.025 | 98.5 | 1500 | 5 |

1)MAPTAC: methacrylamide propyltrimethylammonium chloride, AMPS: sodium 2-acrylamido-2-methylpropanesulfonate

Example 1

(Production of a charge-mosaic membrane)

An anion-exchange resin layer: to P-1 was added a required amount of deionized water to give a solution at a concentration of 10 %. This solution was applied on an acrylic cast plate with 270 mm long × 210 mm wide and, after removing an excessive solution and bubbles, dried on a hot plate at 50 °C for 24 hours to form a film with a thickness of 100 μm.

A cation-exchange resin layer: to P-12 was added a required amount of deionized water to give a solution at a concentration of 10 %. This solution was applied on an acrylic cast plate with 270 mm long × 210 mm wide and, after removing an excessive solution and bubbles, dried on a hot plate at 50 °C for 24 hours to form a film with a thickness of 100 μm.

The cation-exchange resin layers and the anion-exchange resin layers thus prepared were alternately laminated and bonded using an aqueous solution of polyvinyl alcohol PVA124 (from Kuraray Co., Ltd.) as an adhesive, to prepare a laminated charge block. The block thus prepared was cut by a laboratory cutter (from MARUTO INSTRUMENT CO., LTD.) perpendicularly to the lamination plane, to give a film. The film thus obtained was annealed at 170 °C for 30 min, to form physical crosslinking. Subsequently, the film was immersed in a 2 mol/L aqueous solution of an electrolyte, sodium sulfate for 24 hours. To the aqueous solution was added concentrated sulfuric acid to adjust the pH of the aqueous solution to 1, and then the film was immersed in a 0.05 % by volume aqueous solution of glutaraldehyde, which was then stirred by a stirrer at 25 °C for 24 hours to conduct crosslinking. Here, the aqueous solution of glutaraldehyde was prepared by diluting glutaraldehyde (25 % by volume) from Ishizu Chemicals Co. with water. After the crosslinking, the film was immersed in deionized water until the film reached swelling equilibrium, during which deionized water was replaced several times, to provide a charge-mosaic membrane with a thickness of 150 μm.

(Evaluation of a charge-mosaic membrane)

The charge-mosaic membrane thus prepared was cut into a desired size, to give a measurement sample. Using the measurement sample, a charge density and a water permeation flux were determined by the water permeation test as described above. Furthermore, for a composite membrane prepared from the charge-mosaic membrane as described above, a salt permeation flux was determined by a piezodialysis test. The results are shown in Table 5.

Examples 2 to 14

Charge-mosaic membranes were produced as described for Example 1, except that the types of an anion-exchange resin and a cation-exchange resin, a charge density ratio (a)/(b) of an anion-exchange resin (cationic block copolymer (P)) to a cation-exchange resin (anionic block copolymer (Q)), and a annealing temperature were changed as shown in Table 5, and their membrane properties were measured. The results obtained are shown in Table 5.

Comparative Example 1

An anion-exchange resin layer: to a 200 mL Erlenmeyer flask was charged 90 mL of deionized water, and after adding 15 g of polyvinyl alcoholPVA117 (polymerization degree: 1700, saponification degree: 98.5 mol%, from Kuraray Co., Ltd.), the mixture was heated with stirring in a water bath at 95 °C to give a solution. Then, 19 g of polydiallyldimethylammonium chloride (from Aldrich, concentration: 20%, molecular weight: 400,000 to 500,000) was added and then, a desired amount of deionized water was added to prepare an aqueous solution with a solid concentration of 10% (PVA117/polydiallyldimethylammonium chloride = 80/20(solid ratio by weight)). The dispersion thus prepared was applied on an acrylic cast plate with 270 mm long × 210 mm wide and, after removing an excessive liquid and bubbles, dried on a hot plate at 50 °C for 24 hours to form a film with a thickness of 100 μm.

A cation-exchange resin layer: P-15 was dissolved in hot water at 95 °C by heating for 2 hours, to prepare an aqueous solution with a solid concentration of 10 %. The dispersion thus prepared was applied on an acrylic cast plate with 270 mm long × 210 mm wide and, after removing an excessive liquid and bubbles, dried on a hot plate at 50 °C for 24 hours to form a film with a thickness of 100 μm. These layers were alternately laminated and bonded using an aqueous solution of polyvinyl alcohol PVA124 (from Kuraray Co., Ltd.) as an adhesive, to form a laminated charge block.

The block thus prepared was cut by a laboratory cutter (from MARUTO INSTRUMENT CO., LTD.) perpendicularly to the lamination plane, to give a film. The film thus obtained was annealed at 170 °C for 30 min, to form physical crosslinking. Subsequently, the film was immersed in a 2 mol/L aqueous solution of an electrolyte, sodium sulfate for 24 hours. To the aqueous solution was added concentrated sulfuric acid to adjust the pH of the aqueous solution to 1, and then the film was immersed in a 0.05 % by volume aqueous solution of glutaraldehyde, which was then stirred by a stirrer at 25 °C for 24 hours to conduct crosslinking. Here, the aqueous solution of glutaraldehyde was prepared by

diluting glutaraldehyde (25 % by volume) from Ishizu Chemicals Co. with water. After the crosslinking, the film was immersed in deionized water until the film reached swelling equilibrium, during which deionized water was replaced several times, to provide a charge-mosaic membrane with a thickness of 150 μm. The membrane properties of the charge-mosaic membrane prepared were determined as described in Example 1. The measurement results are shown in Table 5.

Comparative Example 2

A charge-mosaic membrane was produced as described in Example 1, except that the types of an anion-exchange resin and a cation-exchange resin were changed as shown in Table 5, and its membrane properties were determined. The measurement results are shown in Table 5.

Comparative Example 3

A charge-mosaic membrane was produced as described in Example 1, substituting unmodified polyvinyl alcohol PVA117 (from Kuraray Co., Ltd.) for an anion-exchange resin and a cation-exchange resin, and its membrane properties were determined. The measurement results are shown in Table 5.
[Table 5]

| | Anion-exchange region | | | Cation-exchange region | | | (a)/(b) | Annealing temperature (°C) | Water permeation flux ($mol \cdot m^{-2} \cdot s^{-1}$) flux | | Salt permeation flux ($\times 10^{-2}$mol)/($m^2 \cdot s$)) |
|---|---|---|---|---|---|---|---|---|---|---|---|
| | Type | Modified amount (mol%) | Charge density (a) ($mol \cdot dm^{-3}$) | Type | Modified amount (mol%) | Charge density (b) ($mol \cdot dm^{-3}$) | | | NaCl concentration (mol/l) | | |
| | | | | | | | | | 0.05 | 0.5 | |
| Example 1 | P-1 | 10 | 1.5 | P-12 | 10 | 1.5 | 1 | 170 | -1800 | -1500 | 12.0 |
| Example 2 | P-2 | 15 | 1.9 | P-13 | 15 | 1.9 | 1 | 170 | -2500 | -2500 | 20.0 |
| Example 3 | P-2 | 15 | 1.6 | P-13 | 15 | 1.6 | 1 | 120 | -2100 | -2000 | 16.0 |
| Example 4 | P-2 | 15 | 1.2 | P-13 | 15 | 1.2 | 1 | 90 | -1800 | -1500 | 12.0 |
| Example 5 | P-3 | 5 | 1.0 | P-14 | 5 | 1.0 | 1 | 170 | -1300 | -850 | 6.8 |
| Example 6 | P-4 | 2 | 0.6 | P-15 | 2 | 0.6 | 1 | 170 | -200 | -170 | 1.4 |
| Example 7 | P-5 | 10 | 1.5 | P-12 | 10 | 1.5 | 1 | 170 | -1800 | -1500 | 12.0 |
| Example 8 | P-7 | 10 | 1.5 | P-12 | 10 | 1.5 | 1 | 170 | -1800 | -1500 | 12.0 |
| Example 9 | P-9 | 10 | 1.5 | P-12 | 10 | 1.5 | 1 | 170 | -1800 | -1500 | 12.0 |
| Example 10 | P-10 | 0.4 | 0.3 | P-16 | 0.4 | 0.3 | 1 | 170 | -30 | -10 | 0.1 |
| Example 11 | P-2 | 15 | 1.9 | P-14 | 5 | 1.0 | 1.9 | 170 | -800 | -750 | 10.0 |
| Example 12 | P-1 | 10 | 1.5 | P-15 | 2 | 0.6 | 2.5 | 170 | -500 | -400 | 8.0 |
| Example 13 | P-3 | 5 | 1.0 | P-12 | 10 | 1.5 | 0.7 | 170 | -600 | -500 | 10.0 |
| Example 14 | P-4 | 2 | 0.6 | P-12 | 10 | 1.5 | 0.4 | 170 | -200 | -150 | 7.0 |
| Comparative Example 1 | Note 1) | 2 | 0.3 | P-17 | 2 | 0.3 | 1 | 170 | -30 | -10 | 0.1 |
| Comparative Example 2 | P-11 | 5 | 0.6 | P-18 | 5 | 0.6 | 1 | 170 | -100 | -30 | 0.2 |
| Comparative Example 3 | Unmodified PVA117 | | | | | 0 | - | 170 | 2000 | 2000 | 0 |
| Note 1) PVA117/polydiallyldimethylammonium chloride (from Aldrich; molecular weight: 400,000) = 8/2 | | | | | | | | | | | |

The results in Table 5 show that in a charge-mosaic membrane containing a cationic polyvinyl alcohol block copolymer as anion-exchange resin domains and an anionic polyvinyl alcohol block copolymer as cation-exchange resin domains, a water permeation flux is negative, negative osmosis occurs and a salt permeation flux by piezodialysis is large (Examples 1 to 14). In particular, it is shown that when an ion modification rate in anion-exchange resin domains and cation-exchange resin domains is 0.5 mol% or more, a salt permeation flux is further improved. It is indicated that a salt permeation flux is further improved when cationic monomer units and anionic monomer units are contained in 0.5 mol% or more in a cation block copolymer and an anion block copolymer, respectively, in a charge-mosaic membrane (Examples 1 to 9 and 11 to 14). Furthermore, it is also indicated that a ratio of a charge density (a) of a cationic block copolymer (P) to a charge density (b) of an anionic block copolymer (Q), that is, (a)/(b), within 0.3 to 2.5 is preferable for the purpose of providing a charge-mosaic membrane with an improved salt permeation flux (Examples 1 to 9 and 11 to 14). In addition, it is indicated that a salt permeation flux can be further improved by annealing at 100 °C or higher (Examples 1 to 3 and 5 to 14). In contrast, it is indicated that a membrane has poor desalination performance with a small salt permeation flux when anion-exchange resin domains are made of a blend resin of a cation polymer and PVA and cation-exchange resin domains are made of a PVA resin into which an anionic group is introduced by random co-polymerization (Comparative Example 1). It is also indicated that a membrane has poor desalination performance with a small salt permeation flux when cation-exchange resin domains and anion-exchange resin domains are made of a PVA resin into which an anionic and a cationic groups are introduced by random co-polymerization (Comparative Example 2). Furthermore, when a membrane was tested substituting an unmodified PVA membrane for a charge-mosaic membrane, a water permeation flux was positive, so that a salt failed to permeate the membrane (Comparative Example 3).

REFERENCE SIGNS LIST

1: salt bridge (3M KCl)
2: Ag-AgCl electrode
3: sample membrane (membrane area: 7 $cm^2$)
4: electrometer
5: sample membrane (membrane area: 3 $cm^2$)
6: capillary
7: aqueous solution of KCl
8: deionized water
9: cell
10: $N_2$ cylinder
11: pressure gauge
12: stirrer
13: sample membrane (membrane area: 5 $cm^2$)
14: diagometer

## Claims

1. A charge-mosaic membrane comprising
a cationic block copolymer (P) having a vinyl alcohol polymer block (A) and a cationic-group containing polymer block (B) as components; and
an anionic block copolymer (Q) having a vinyl alcohol polymer block (C) and an anionic-group containing polymer block (D) as components.

2. The charge-mosaic membrane as claimed in Claim 1, wherein the cationic block copolymer (P) contains 0.1 mol% or more of a cationic-group containing monomer.

3. The charge-mosaic membrane as claimed in Claim 1, wherein the anionic block copolymer (Q) contains 0.1 mol% or more of an anionic-group containing monomer.

[Fig. 1]

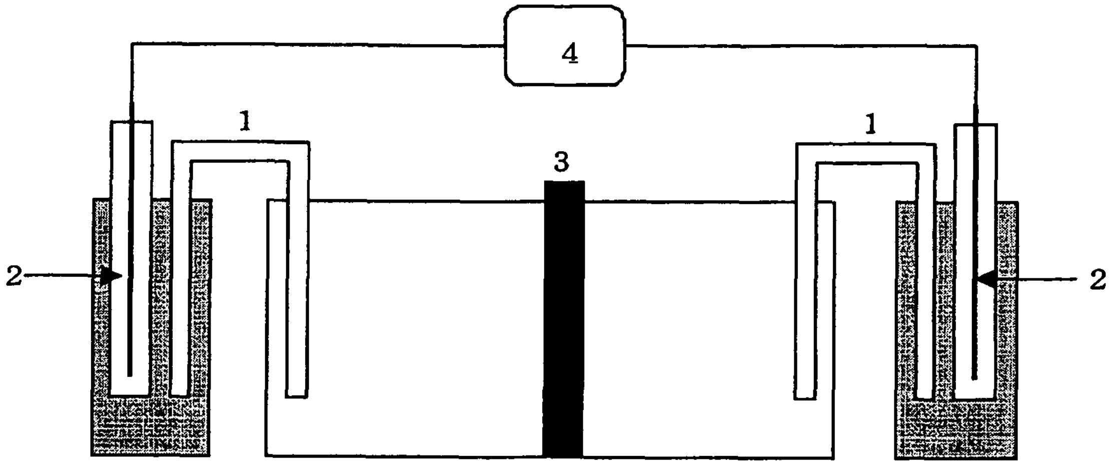


[Fig. 2]

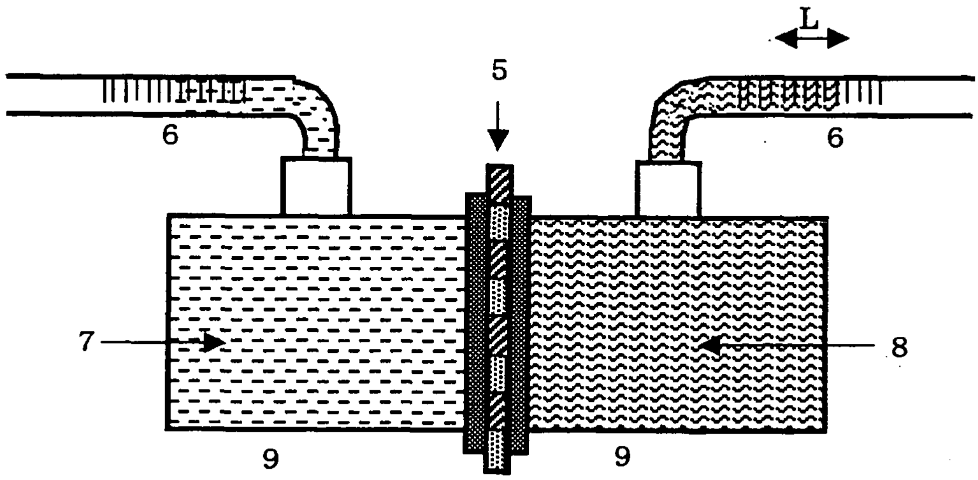

[Fig. 3]

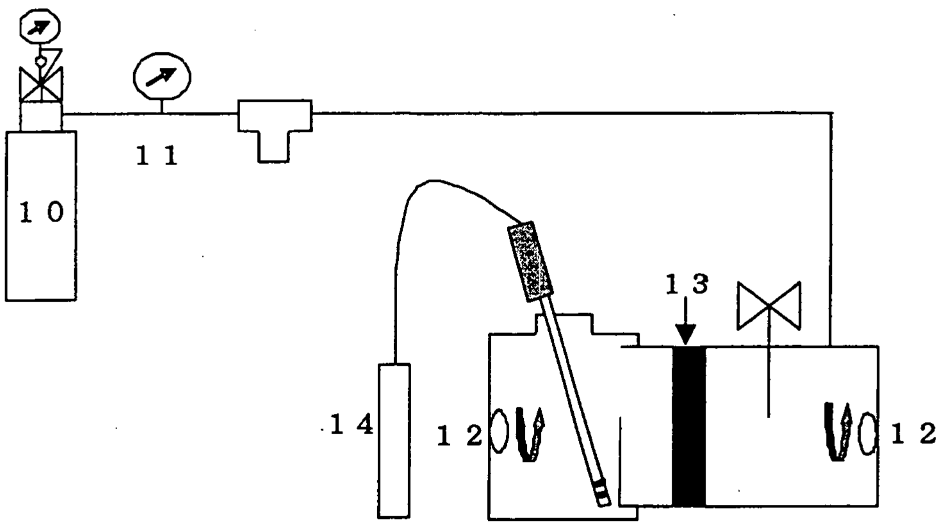

**INTERNATIONAL SEARCH REPORT**

International application No.
PCT/JP2010/056364

A. CLASSIFICATION OF SUBJECT MATTER
*B01D69/02*(2006.01)i, *B01D71/38*(2006.01)i, *B01D71/80*(2006.01)i, *C08J5/22*(2006.01)i

According to International Patent Classification (IPC) or to both national classification and IPC

B. FIELDS SEARCHED

Minimum documentation searched (classification system followed by classification symbols)
B01D69/02, B01D71/38, B01D71/80, C08J5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-188518 A (Yamaguchi University), 21 August 2008 (21.08.2008), claims 1, 3; paragraphs [0006], [0037] to [0047], [0060] (Family: none) | 1-3 |
| A | JP 2008-264704 A (Takuma Co., Ltd.), 06 November 2008 (06.11.2008), claims 1 to 5; paragraphs [0003] to [0009]; examples (Family: none) | 1-3 |
| A | JP 11-239720 A (Dainichiseika Color & Chemicals Mfg. Co., Ltd.), 07 September 1999 (07.09.1999), claim 1; paragraph [0014] (Family: none) | 1-3 |

☐ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 July, 2010 (02.07.10) | 13 July, 2010 (13.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 59203613 A
- JP 2006297338 A
- JP 8155281 A
- JP 59187003 A
- JP 59189113 A

### Non-patent literature cited in the description

- *J. Membr. Sci.,* 2008, vol. 310, 466
- *The proceedings of the Annual Meeting of the Society of Fiber Science and Technology,* 2001, vol. 56 (1), 33